# EUROPÄISCHE PATENTANMELDUNG

(11) **EP 0 862 289 A2**
(43) Veröffentlichungstag der Anmeldung: **02.09.1998**
(21) Anmeldenummer: 98440037.4
(22) Anmeldetag: 25.02.1998
(51) Int. Cl.: H04J 3/14, H04J 3/12, H04J 3/06

(54) **Verfahren zum Prüfen von Taktpfaden und Netzelement zur Durchführung des Verfahrens**

(30) Priorität: 26.02.1997 DE 19707668; 16.07.1997 DE 19730438
(71) Anmelder: ALCATEL ALSTHOM COMPAGNIE GENERALE D'ELECTRICITE, 75008 Paris (FR)
(72) Erfinder: Wolf, Michael, Dr., 74395 Mundelsheim (DE)
(74) Vertreter: Schätzle, Albin, Dipl.-Phys.

(57) **Zusammenfassung**

Das angegebene Prüfverfahren ermöglicht die Prüfung von Taktpfaden über die in einem synchronen digitalen Nachrichtenübertragungssystem ein Referenztakt zur Synchronisierung an Netzelemente übertragen wird. Dazu wird der Referenztakt am Anfang des zu prüfenden Taktpfades markiert, indem ihm eine Information aufmoduliert wird. Am Ende des zu prüfenden Taktpfades wird beobachtet, ob der Referenztakt die eingangs aufmodulierte Information enthält. Die Information ist so gestaltet, daß der Betrieb des synchronen digitalen Nachrichtenübertragungssystems nicht beeinträchtigt ist.

Weiter wird ein Netzelement angegeben, welches in der Lage ist, die für eine Prüfung notwendige Phasenmodulation mit seinem Taktgenerator selbst zu erzeugen.

## Beschreibung

Die Erfindung betrifft ein Verfahren zum Prüfen von Taktpfaden in einem synchronen digitalen Nachrichtenübertragungssystem und ein Netzelement zur Durchführung des Verfahrens.

Bei der Nachrichtenübertragung in einem synchronen digitalen Nachrichtenübertragungssystem, beispielsweise einem SDH-System oder SONET-System (SHD=synchrone digitale Hierarchie, SONET=Synchronous Optical Network), kommt es wesentlich darauf an, daß alle Netzelemente (z.B. Add/Drop-Multiplexer, Crossconnects oder Leitungsmultiplexer) synchron miteinander arbeiten. In einem Artikel von R. Kiefer, (,,Meßaufgaben an SDH-Übertragungssystemen", ntz Band 46, Heft 2, S. 92-96, 1993) ist beschrieben, daß Netzelemente durch einen Referenztakt (bezeichnet als Zentraltakt, 2 MHz) synchronisiert werden. Weiter ist beschrieben, daß zur Simulation nicht idealen Referenztaktverhaltens zwischen Referenztaktquelle und Netzelement ein Analysator geschaltet werden kann, der den Referenztakttakt in bestimmten Schritten in der Frequenz verstimmt. Das Netzelement reagiert mit Pointer-Operationen, die vom Analysator dokumentiert werden, um Schwachstellen im Systemverhalten zu erkennen. Bei zu großer Abweichung des Referenztaktes schaltet das Netzelement auf Ersatzsynchronisierung um.

Das geschilderte Verfahren erlaubt es jedoch nicht, die Verbindungen, über die ein Netzelement mit dem Referenztakt versorgt wird zu überprüfen und es ist nicht möglich, nach diesem Verfahren herauszufinden, über welche Verbindungen ein Netzelement den zur Synchronisation verwendeten Referenztakt erhält.

Eine Aufgabe der Erfindung ist es, ein Verfahren zum Prüfen von Taktpfaden in einem synchronen digitalen Nachrichtenübertragungssystem, anzugeben, in dem Sinn, daß das Bestehen und Funktionieren der Verbindungen überprüft wird, über die ein Referenztakt an Netzelemente des synchronen digitalen Nachrichtenübertragungssystems verteilt wird. Eine weitere Aufgabe ist es, ein Netzelement zur Durchführung des Verfahrens anzugeben.

Die Aufgabe wird hinsichtlich des Verfahrens gelöst durch die Merkmale des Patentanspruches 1 und hinsichtlich des Netzelementes durch die Merkmale der Patentansprüche 10 und 12. Vorteilhafte Ausgestaltungen sind den abhängigen Patentansprüche zu entnehmen.

Das erfindungsgemäße Verfahren weist den Vorteil auf, daß eine Prüfung der Verbindungen möglich ist, ohne daß es zu Beeinträchtigungen im Betrieb des Nachrichtenübertragungssystems kommt und daß die Konfiguration des Nachrichtenübertragungssystems zur Messung nicht verändert zu werden braucht.

Im folgenden wird die Erfindung anhand von Ausführungsbeispielen und den folgenden Figuren erläutert. Es zeigen:
- Figur 1a: Ein synchrones digitales Nachrichtenübertragungssystem mit eingezeichnetem Taktpfad (fette Pfeile),
- Figur 1b: das Nachrichtenübertragungssystem aus Figur la mit einem anderen Taktpfad als Ersatzsynchronisierung,
- Figur 1c: das Nachrichtenübertragungssystem aus Figur 1a mit einem Taktpfad von einer externen Referenztaktquelle als Ersatzsynchronisierung,
- Figur 1d: das Nachrichtenübertragungssystem aus Figur 1a mit einem fehlerhaften Taktpfad (Synchronisationsschleife),
- Figur 2: eine schematische Darstellung eines Nachrichtenübertragungssystem während einer Durchführung des Verfahrens,
- Figur 3: eine Taktableitungsschaltung eines Netzelementes und
- Figur 4: eine andere Taktableitungsschaltung und eine Prüfeinrichtung für ein Netzelement.

Die Netzelemente eines synchronen digitalen
Nachrichtenübertragungssystems werden mit einen Referenztakt synchronisiert, der an alle Netzelemente verteilt wird. Der Referenztakt ist eine Pulsfolge mit einer Pulsfolgefrequenz von beispielsweise 2 MHz. Die Verteilung erfolgt zum Teil über digitale Nachrichtenverbindungen, wobei der Referenztakt im Netzelement aus empfangenen Nachrichtensignalen rückgewonnen und durch Tiefpaßfilterung von Frequenzschwankungen (Jitter) befreit wird, und zu einem anderen Teil über Taktleitungen beispielsweise zwischen mehreren Neztelementen eines Netzknotens. Als Taktpfad wird im folgenden die physikalische Verbindung zwischen einer Referenzatktquelle, beispielsweise einem mit dem Referenztakt synchronisierten ersten Netzelement, und einem zweiten Netzelement bezeichnet.

Eine Prüfung von Taktpfaden ist wünschenswert, um sicherzustellen, daß alle Netzelemente des synchronen digitalen
Nachrichtenübertragungssystems den Referenztakt erhalten, daß bei Ausfall von einer oder mehrerer Verbindungen oder Netzelemente auf eine Ersatzsynchronisierung umgeschaltet wird, d.h. daß ein Netzelement, welches die Verbindung zu seiner Referenztaktquelle verliert, eine andere Quelle als Referenztaktquelle auswählt, und daß bei der Verteilung des Referenztaktes, insbesondere bei der Umschaltung auf
Ersatzsynchronisierungen, keine Synchronisationsschleifen entstehen, d.h. daß nicht zwei Netzelemente sich gegenseitig als Referenztaktquelle nutzen. In diesem Sinne bedeutet eine Prüfung eines Taktpfades, daß das Bestehen und Funktionieren einer bestimmten physikalische Verbindungen überprüft wird, über die ein Netzelement mit dem Referenztakt versorgt wird.

Ein Grundgedanke der Erfindung nun besteht darin, zur Prüfung eines Taktpfades an dessen Anfang dem Referenztakt eine Information aufzumodulieren und diese Information am Ende des Taktpfades zu beobachten. Erreicht die Information das Ende des Taktpfades, so ist dieser überprüft. Ein anderer Grundgedanke liegt darin, die aufmodulierte Information so zu gestalten, daß sie durch die Tiefpaßfilterung in Taktableitungsschaltungen der Netzelemente nicht entfernt wird. Dabei muß die aufmodulierte Information so gestaltet sein, daß sie im Bereich zulässiger Phasen- und Frequenzschwankungen liegt, um den Betrieb des Nachrichtenübertragungssystems während einer Prüfung nicht zu beeinträchtigen.

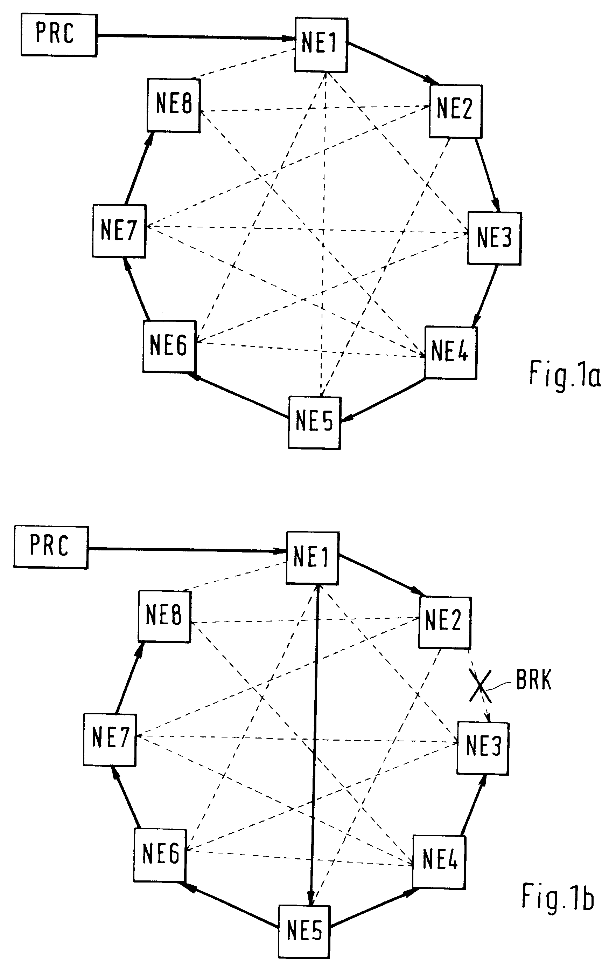

Bei einem ersten Ausführungsbeispiel ist das synchrone digitale Nachrichtenübertragungssystem ein SDH-System. Dies ist in Figur 1a dargestellt. Es besteht aus acht ringförmig angeordneten Netzelementen NE1, ... , NE8, die über zahlreiche Querverbindungen auch untereinander verbunden sind. Weiter ist ein zentraler Taktgenerator PRC (primary reference clock) gezeigt, von dem das erste Netzelement NE1 einen Referenztakt zur Synchronisation erhält. Zusätzlich ist auch, angedeutet durch dicke Pfeile, der Taktpfad des achten Netzelementes eingezeichnet. Die Verteilung des Referenztaktes erfolgt wie gezeigt vom ersten Netzelement NE1 über die dazwischengeschalteten anderen sechs Netzelemente NE2, ..., NE7 bis zum achten Netzelement NE8. Dabei wird der Referenztakt von jedem Netzelement aus dem vom vorangegangenen Netzelement empfangenen Nachrichtensignal zurückgewonnen.

Um nun nach dem erfindungsgemäßen Verfahren den eingezeichneten Taktpfad vom ersten bis zum achten Netzelement zu überprüfen, wird der Referenztakt des ersten Netzelementes markiert, indem ihm eine Information aufmoduliert wird. In dem ersten Ausführungsbeispiel geschieht dies, indem der Referenztakt in der Phase moduliert wird. Diese Phasenmodulation hat eine Modulationsfrequenz, die nieriger ist, als die Filterfrequenz, mit der die bei der Taktrückgewinnung in den Netzelementen NE1, ..., NE8 eingesetzten Tiefpaßfiler den Referenztakt filtern. Dadurch pflanzt sich die Phasenmodulation ungestört durch die zwischengeschalteten Netzelemente NE2, ..., NE7 bis zu dem Netzelement NE8 fort. Wenn nun am Ende des zu prüfenden Taktpfades beobachtet wird, daß der Referenztakt des achten Netzelementes NE8 die Phasenmodulation enthält, so kann daraus der Rückschluß gezogen werden, daß ein intakter Taktpfad zwischen dem ersten und dem achten Netzelement vorliegt. Beispielsweise kann der Referenztakt, den das achte Netzelement NE8 aus dem von dem siebten Netzelement NE7 empfangenen Nachrichtensignal abgeleitet hat, mit einem Speicheroszilloskop oder mit einem Frequenzanalyser geprüft werden. Wird dabei die Phasenmodulation nachgewiesen, so ist der Taktpfad überprüft.

In Figur 1b ist dasselbe SDH-System gezeigt, jedoch ist die Verbindung zwischen dem zweiten und dem dritten Netzelement NE2, NE3 an der Stelle BRK unterbrochen. Der ursprüngliche Taktpfad vom ersten zum achten Netzelement ist daher unterbrochen. Dies wird von den betroffenen, von ihrer Referenztaktquelle abgeschnittenen Netzelementen NE3, ..., NE8 bemerkt. Das Netzelement NE5 schaltet auf Ersatzsynchronisierung um, indem es sich seinen Referenztakt aus dem über die Verbindung zum ersten Netzelement NE1 empfangenen Nachrichtensignal ableitet. Die Netzelemente NE6, ..., NE8 haben nun wieder eine Referenztaktquelle und das vierte und dritte Netzelement NE3 schalten ebenfalls auf Ersatzsynchronisierung um, indem sie sich auf das fünfte, bzw. vierte Netzelement NE5, NE4 synchronisieren, wie dies in Figur 1b gezeigt ist.

In dieser Konstellation kann nun wieder das erfindungsgemäße Prüfverfahren angewendet werden. Die Phase des Referenztaktes wird beim ersten Netzelement NE1 moduliert. Am achten Netzelement NE8, aber auch an allen anderen Netzelementen NE2, ..., NE7 kann die Phasenmodulation beobachtet werden, wodurch verifiziert wird, daß das achte NE8 aber auch alle anderen Netzelemente NE2, ..., NE7 einen funktionierenden Taktpfad zu dem ersten Netzelement aufweisen. Mit Kenntnis von der Unterbrechung BRK kann auch darauf geschlossen werden, daß die Ersatzsynchronisierung der betroffenen Netzelemente funktioniert.

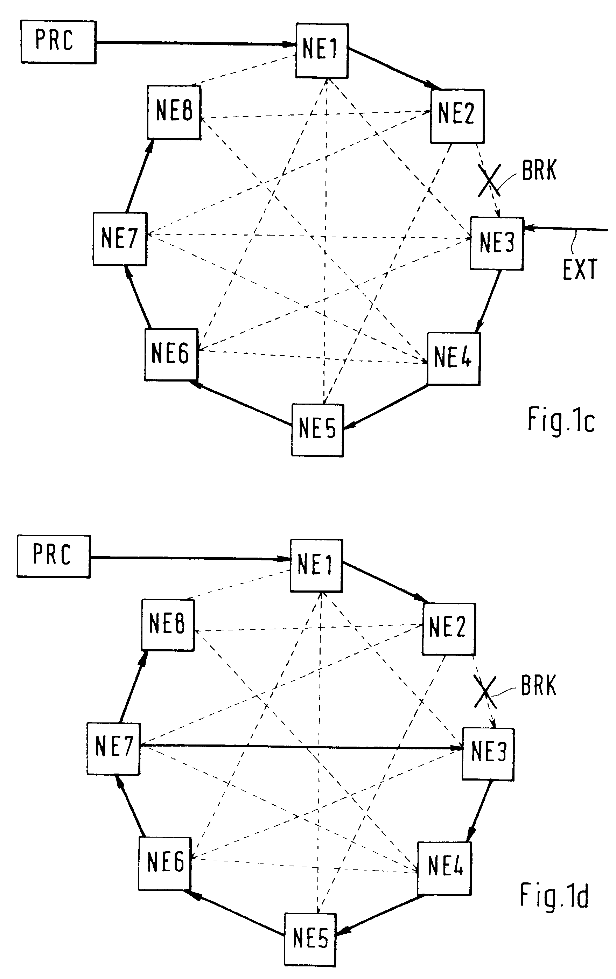

Anders ist dies bei der in Figur 1c gezeigten Konstellation. Nachdem die Unterbrechung BRK aufgetreten ist, hat das dritte Netzelement NE3, nachdem es den Wegfall seiner Referenztaktquelle festgestellt hat, auf eine andere Ersatzsynchronisierung umgeschaltet. Es verwendet nun eine externe Referenztaktquelle EXT. Dabei kann es sich entweder um ein nicht gezeigtes weiteres Netzelement handeln, oder um einen zweiten zentralen Taktgenerator (primary reference clock). Die weiteren Netzelemente NE4, NE8 werden in beiden Fällen wieder korrekt synchronisiert, weshalb keine Notwendigkeit für sie besteht, auf eine Ersatzsynchronisierung umzuschalten.

Verwendet man bei dieser Konstellation das erfindungsgemäße Prüfverfahren und markiert den Referenztakt bei dem ersten Netzelement NE1 mit einer aufmodulierten Information, so erkennt man aus der Tatsache, daß die Information das achte Netzelement NE8 nicht erreicht, daß der Taktpfad vom ersten zum achten Netzelement NE1, NE8 gestört ist. Weitere Untersuchungen nach dem erfindungsgemäßen Prüfverfahren können nun so ablaufen, daß schrittweise geprüft wird, ob der Taktpfad von achten zum siebten Netzelement NE8, NE7, vom achten zum sechsten Netzelement NE8, NE6 usw. funktionstüchtig ist. Dazu wird beispielsweise schrittweise zuerst bei dem siebten, anschließend bei dem sechsten usw. Netzelement NE7, NE8, ... die Phase des Referenztaktes moduliert und diese Phasenmodulation am achten Netzelement NE8 beobachtet. Ist der Taktpfad bis zum dritten Netzelement NE3 überprüft, so kann bei Kenntnis der Unterbrechung BRK herausgefunden werden, daß eine beispielsweise beabsichtigte Ersatzsynchronisierung des Netzelementes NE3 funktioniert.

In Figur 1d ist eine fehlerhafte Konfiguration des SDH-Systems gezeigt. Nach Auftreten der Unterbrechung BRK hat das Netzelement NE3 auf eine in diesem Fall fehlerhafte Ersatzsynchronisierung umgeschaltet und seinen Referenztakt von dem vom siebten Netzelement NE7 empfangenen Nachrichtensignal abgeleitet. Dies könnte vorkommen, wenn eine Voreinstellung für mögliche Ersatzsynchronisierungen am dritten Netzelement NE3 falsch getroffen ist und das dritte Netzelement NE3 die Unterbrechung BRK vor dem siebten Netzelement NE7 registriert. Im vorliegenden Fall hat sich eine Taktschleife gebildet, was in einem synchronen digitalen Nachrichtensystem in jedem Fall vermieden werden muß.

Bei dieser Konstellation ergibt die Prüfung des Taktpfades vom ersten zum achten Netzelement NE1, NE8 ebenfalls, daß der Taktpfad unterbrochen ist. Eine weitere Prüfung nach dem erfindungsgemäßen Verfahren kann nun so ablaufen, daß der Referenztakt am dritten Netzelement NE3 in der Phase moduliert wird. Durch die Bildung der Taktschleife kann die Phasenmodulation, die ja in den folgenden Netzelementen NE4 bis NE7 nicht herausgefiltert wird, am von dem empfangenen Signal abgeleiteten Referenztakt am dritten Netzelement NE3 gemessen werden. Dadurch wiird die Existenz der Taktschleife festgestellt und der Fehler kann behoben werden.

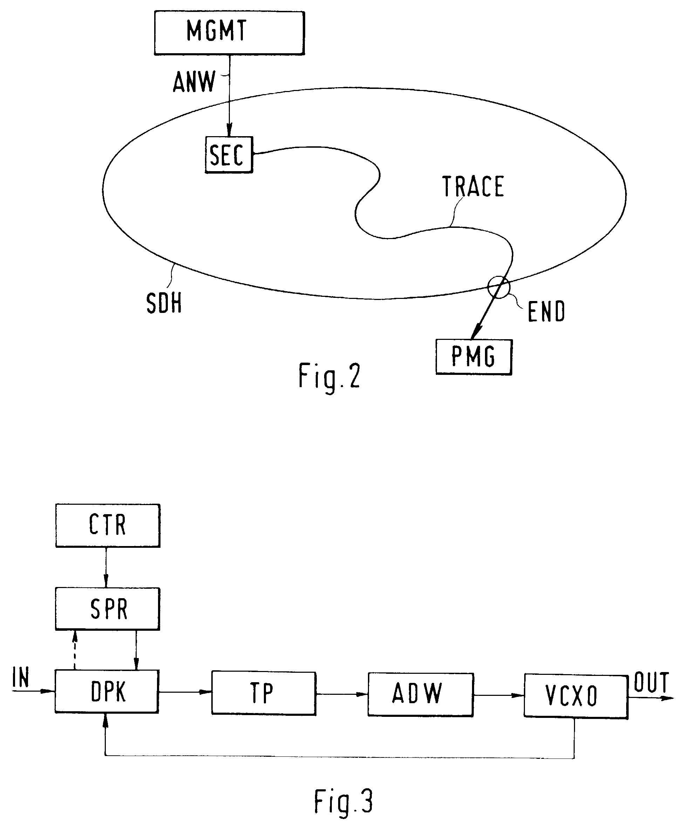

In Figur 2 ist die Anordnung eines zweiten Ausführungsbeispiels für ein erfindungsgemäßes Prüfverfahren abgebildet. Eine Netzwerk-Managementeinrichtung MGMT eines synchronen digitalen Nachrichtenübertragungssystems SDH, in diesem Fall ebenfalls eines SDH-Systemes, übermittelt an ein Netzelement SEC die Anweisung, die Phase seines Referenztaktes zu modulieren. An einer bestimmten Stelle END des SDH-Systems wird mit einem Phasenmeßgerät PMG die Phasenmodulation gemessen. Aus der Tatsache daß die Phasenmodulation bei END auftritt, wird wieder geschlossen, daß zwischen dem Netzelement SEC und dem Punkt END ein intakter Taktpfad TRACE besteht, der damit überprüft ist.

Eine Taktableitungsschaltung für ein Netzelement, die in der Lage ist, die für eine Durchführung des Prüfverfahrens notwendige Phasenmodulation zu erzeugen, ist in Figur 3 dargestellt. Sie besteht aus einem digitalen Phasenkomparator DPK, der die Phasenlage der an seinen Eingängen anliegenden Signale vergleicht und in Abhängigkeit dieser Phasenlage ein digitales Korrektursignal für einen spannungsgesteuerten Quartzoszillator VCXO (voltage-controlled crystal oscillator) generiert. An dem einen Eingang des digitalen Phasenkomparators DPK liegt ein externes Taktsignal IN, beispielsweise der Takt eines empfangenen Nachrichtensignales, an. Der andere Eingang ist mit dem Ausgang des spannungsgesteuerten Quartzoszillators VCXO verbunden. Zwischen den Ausgang des digitalen Phasenkomparators DPK und den Steuereingang des spannungsgesteuerten Quartzoszillators VCXO ist ein digitaler Tiefpaß TP geschaltet, der als Integrator den stationären Phasenfehler minimiert, sowie ein Analog/Digital-Wandler ADW, der aus dem gefilterten, digitalen Korrektursignal eine Steuerspannung für den spannungsgesteuerten Quartzoszillator VCXO erzeugt. Mit dieser Steuerspannung wird der spannungsgesteuerte Quartzoszillator VCXO auf das externe Taktsignal abgeglichen.

Der digitale Phasenkomparator DPK besitzt einen Steuereingang der mit einer Sollphasenregeleinrichtung SPR verbunden ist. Mittels dieser Sollphasenregeleinrichtung SPR wird eine Sollphase zwischen dem externen Taktsignal und dem Ausgangsignal des spannungsgesteuerten Quartzoszillators VCXO eingestellt, um Einschwingvorgänge oder Phasentransienten beispielsweise bei der Umschaltung auf eine Ersatzsynchronisation zu vermeiden. Dazu besteht eine gestrichelt gezeichnete Verbindung von dem digitale Phasenkomparator DPK zu der Sollphasenregeleinrichtung SPR, über die große Phasensprünge von der Sollphasenregeleinrichtung SPR registriert werden und die Sollphase in einem solchen Fall neu eingestellt wird.

Die Sollphasenregeleinrichtung SPR ist mit einer Steuereinrichtung CTR verbunden. Diese Steuereinrichtung CTR veranlaßt nun, daß im Falle einer Prüfung nach dem erfindungsgemäßen Prüfverfahren die Sollphase von der Sollphasenregeleinrichtung periodisch zwischen einem oberen und einem unteren Wert verändert wird. Dadurch wird eine Phasenmodulation des Referenztaktes erzeugt. Dies hat den besonderen Vorteil, daß keine der bestehenden Verbindungen aufgetrennt werden muß, um ein zusätzliches Gerät (Generator) zum Erzeugen der Phasenmodulation hinzuzuschalten. Durch Auftrennen einer Verbindung würde die Konfiguration des Nachrichtenübertragungssystems verändert, da zwischenzeitlich auf eine Ersatzsynchronisierung umgeschaltet werden müßte um die Taktversorgung der betreffenden Netzelemente sicherzustellen. Auch die Messung selbst wird stark vereinfacht.

Um den Betrieb des SDH-Systems nicht zu beeinträchtigen, liegen die Modulationshübe, d.h. die Differenz zwischen dem Mittelwert der Sollphase und dem oberen oder unteren Wert, im Bereich von plus/minus 125 ns. Dieser Wert wird insbesondere dann angewendet, wenn die Phasenmodulation von einem Netzelement der Hierarchieebene Stratum Level 3 erzeugt wird. Solche Netzelemente werden als SDH Equipment Clock (SEC) bezeichnet. Für den Fall, daß die Phasenmodulation von einer sogenannten Sekundärtaktversorgung der Hierarchieebene Stratum Level 2 erzeugt wird, kann der Modulationshub auch bei plus/minus 250 ns liegen. Solche Sekundärtaktversorgungen werden auch als SSU (Synchronization Supply Unit) bezeichnet. Zudem sollte die zeitliche Dauer der einzelnen Modulationshübe im Bereich von 1 s bis 1000 s sein, um durch Tiefpaßfilterung in den Netzelementen nicht entfernt zu werden. Die Phasenhübe sind so bemessen, daß kein unzulässiges Phasengeräusch im SDH-System erzeugt wird. Auch die temporären Frequenzoffsets bleiben unter dem für SDH-Netzelemente kritischen Wert von 7,5 ppm.

Ein Modulationshub, d.h. eine Phasenänderung von Phasenmittelwert zu oberem oder unteren Wert, bedeutet ein binäres Zeichen + oder -. Eine besonders vorteilhafte Varinate des Prüfverfahrens besteht darin, dem Takt anstelle der Zeichenfolge +-+-+-+-... eine binär codierte Zeichenfolge (beispielsweise CMI-codiert) aufzumodulieren. Trotz der äußerst geringen Übertragungsrate von 1 bis 0,001 Zeichen/s läßt sich auf diesem Weg Information, beispielsweise über den Synchronisationsstatus des Netzelementes am Anfang des Synchronisationspfades übertragen. Auf diese Weise ist es auch möglich, parallele, unabhängige Messungen durchzuführen, beispielsweise die gleichzeitige Prüfung mehrerer Taktpfade zu verschiedenen Netzelementen. Es ist auch vorteilhaft, als Zeichfolge eine endliche Zeichenfolge zu verwenden, die periodisch wiederholt wird. Dadurch werden Übertragungsfehler minimiert. Solche Übertragungsfehler können leicht auftreten, da die Phasenmodulation nur geringfügig über dem Rauschen liegt.

Eine andere Möglichkeit, den Referenztakt am Anfang eines zu prüfenden Taktpfades zu markieren, könnte darin bestehen, den Takt in der Frequenz zu modulieren.

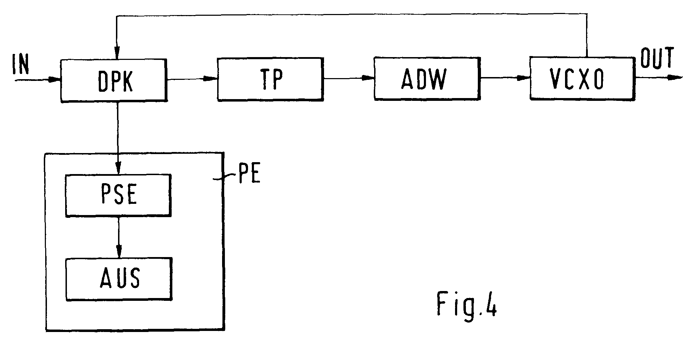

Für die Durchführung des erfindungsgemäßen Verfahrens ist es von Vorteil, die dem Takt aufmodulierte Information direkt an einem Netzelement messen zu können, ohne ein weiteres Meßgerät zu benötigen. Ein dafür geeignetes Netzelement enthält also Mittel zum Prüfen, ob der Referenztakt während einer Prüfung die aufmodulierte Information enthält.Eine Taktableitungsschaltung und eine Prüfeinrichtung PE für ein solches Netzelement, ist in Figur 4 gezeigt.

Wie in Figur 3 enthält die Taktableitungsschaltung einen spannungsgesteuerten Oszillator VCXO, einen Analog/Digital-Wandler ADW, einen Tiefpaßfilter TP und einen digital arbeitenden Phasenkomparator DPK. Der Phasenkomparator DP vergleicht die Phasenlage von Eingangstaktsignal und Takt des Oszillators VCXO und generiert in Abhängigkeit dieser Phasenlage ein Korrektursignal, welches den Oszillator VCXO über den Tiefpaßfilter TP und den Analog/Digital-Wandler zugeleitet wird.

Der digitale Phasenkomparator weist einen weiteren Ausgang auf, der mit der Prüfeinrichtung PE verbunden ist. Über diese Verbindung sendet der Phasenkomparator DPK periodisch nach festgelegten Zeitabständen den momentanen Phasenmeßwert, d.h. einen Wert für die Phasenlage zwischen Eingangstakt und Oszillatortakt. Der Zeitabstand kann beispielsweise ein Wert zwischen 10 ms und 100 ms sein. Die Phasenmeßwerte werden einer Vorrichtung PSE zur Erkennung von Phasensprüngen zugeleitet. Daran schließt sich eine Auswerteinrichtung AUS an, welche nach bekannten Verfahren zur Datenregeneration arbeitet. Beispielsweise kann hierzu eine Überlagerung von mehreren Zyklen der Zeichenfolge ausgewertet werden. Durch diese Maßnahme wird Phasengeräusch unterdrückt. Beides, Phasensprungerkennung und Auswertung kann durch Software realisiert sein.

Besonders vorteilhaft ist es hierbei auch, während der Messung die Bandbreite der Taktableitungsschaltung, die durch den Tiefpaßfilter TP bestimmt wird auf einen geeigneten kleineren Wert herabzusetzen, damit die während der Messung erzeugte Phasenmodulation nicht in der Taktableitungsschaltung des empfangenden Netzelementes gedämpft wird.

Um die Testsignale aus dem Phasenrauschen herauszufiltern, kann eine Korrelationstechnik vorteilhaft eingesetzt werden. Dadurch kann die Amplitude der zur Messung erzeugten Phasenhübe klein gehalten werden und die Sicherheit, daß die Phasenmodulation während der Messung detektiert wird, wird erhöht.

Zur Detektion der bei einer Messung erzeugten Phasensprüngen ist es auch möglich, das Kontrollsignal für den spannungsgesteuerten Oszillator VCXO auszuwerten. In rein digital arbeitenden Phasenregelkreisen, sogenannten PPLs (Phase-Locked Loops), ist dieses Kontrollsignal ein Digitalsignal. Eine rein digital arbeitende Phasenregelschleife wird von einem Prozessor kontrolliert. Dabei ist es möglich, die zur Detektion notwendige Auswertung des Oszillator-Kontrollsignales von demselben Prozessor ausführen zu lassen. Dadurch werden Hardware-Komponenten eingespart. Die Periode der bei der Messung erzeugten Modulationsfrequenz sollte zwischen 100 und 1000 s liegen. Die Belastung des Prozessors während der Messung bleibt dann gering.

Die Steuerung des Prozessors erfolgt durch eine Software. Zur Durchführung der Messung sind folgende Software-Register erforderlich, die beispielsweise zentral von einem Managementsystem oder direkt an dem betreffenden Netzelement gesetzt oder ausgewertet werden können:
- Enable/Disable der Testfunktion 1 Bit
- Send/Receive 1 Bit
- Expected Signal received / not received 1 Bit
- Confidence of reception exceeds threshold: yes / no 1 Bit

Folgende weitere Software-Register sind vorteilhaft, um weitere Funktionen ausführen zu können:
- Confidence of reception exceeds 2nd threshold: yes / no 1 Bit
- Modulation frequency code 2 Bit
- Modulation amplitude code 2 Bit

Mit den letzten beiden Software-Registern kann Frequenz und Amplitude der Phasenmodulation gesetzt und codiert werden, um so parallele, unabhängige Messungen durchführen zu können.

Vorzugsweise handelt es sich bei dem Netzelement um einen CrossConnect (CC) der synchronen digitalen Hierarchie (SDH), da dieser sich aufgrund seiner Beudeutung für SDH-Netze an den wichtigen Schaltstellen für Referenztakte befindet.

## Patentansprüche

1. Verfahren zum Prüfen von Taktpfaden in einem synchronen digitalen Nachrichtenübertragungssystem, über die ein Referenztakt zur Synchronisierung an Netzelemente übertragen wird,
**dadurch gekennzeichnet**, daß
- der Referenztakt am Anfang des zu prüfenden Taktpfades markiert wird, indem ihm eine Information aufmoduliert wird,
- die Information so gestaltet ist, daß der Betrieb des synchronen digitalen Nachrichtenübertragungssystems nicht beeinträchtigt ist, und
- am Ende des zu prüfenden Taktpfades geprüft wird, ob der Referenztakt die eingangs aufmodulierte Information enthält.

2. Verfahren nach Anspruch 1, bei dem die Information darin besteht, daß der Referenztakt in der Phase moduliert wird.

3. Verfahren nach Anspruch 2, bei dem die Frequenz der
Phasenmodulation nieriger ist, als eine Filterfrequenz, mit der Tiefpaßfiler von Netzelementen des synchronen digitalen Nachrichtenübertragungssystems einen empfangenen Referenztakt filtern.

4. Verfahren nach Anspruch 2, bei dem der Modulationshub der Phasenmodulation plus/minus 125 ns beträgt.

5. Verfahren nach Anspruch 2, bei dem der Modulationshub der Phasenmodulation plus/minus 250 ns beträgt.

6. Verfahren nach Anspruch 2, bei dem die zeitliche Dauer der einzelnen Modulationshübe der Phasenmodulation eine vorbestimmte Größe im Bereich von 1 s bis 1000 s ist.

7. Verfahren nach Anspruch 2, bei dem der Phase des Referenztaktes eine binär codierte Zeichenfolge aus einzelnen Modulationshüben aufmoduliert wird.

8. Verfahren nach Anspruch 7, bei dem es sich bei der Zeichenfolge um eine endliche Zeichenfolge handelt, die periodisch wiederholt wird.

9. Verfahren nach Anspruch 1 oder 2, bei dem zur Prüfung, ob der Referenztakt die eingangs aufmodulierte Information enthält, eine Korrelationstechnik angewendet wird, um die Information aus dem Rauschen zu filtern.

10. Netzelement eines synchronen digitalen
Nachrichtenübertragungssystems mit einer Taktableitungsschaltung, die aus einem empfangenen Nachrichtensignal einen Referenztakt ableiten kann, **gekennzeichnet durch**
Mittel (CTR) zum Markieren des Referenztaktes, die dem Referenztakt während einer Ausführung des Verfahrens nach Anspruch 1 eine Information hinzufügen.

11. Netzelement nach Anspruch 10, bei dem die Taktableitungsschaltung folgende Baugruppen umfaßt:
- einen digital arbeitenden Phasenkomparator (DPK),
- eine mit dem Phasenkomparator verbundene Sollphasenregeleinrichtung (SPR) zum Einstellen einer Sollphase,
- einen digitalen Tiefpaßfilter (TP), der mit einem Ausgang des Phasenkomparators (DPK) verbunden ist,
- einen Analog/Digital-Wandler (ADW) der mit dem Ausgang des digitalen Tiefpaßfilters (TP) verbunden ist, und
- einen spannungsgesteuerten Quartzoszillator (VCXO), dessen Steuereingang mit dem Ausgang des Analog/Digital-Wandlers (ADW) verbunden ist,
und bei dem die Mittel zum Markieren des Referenztaktes eine mit der Sollphasenregeleinrichtung (SPR) verbundene Steuereinrichtung (CTR) beinhalten, welche während einer Ausführung des Verfahrens nach Anspruch 1 die Sollphase periodisch zwischen einem oberen und einem unteren Wert verändert.

12. Netzelement eines synchronen digitalen
Nachrichtenübertragungssystems mit einer Taktableitungsschaltung, die aus einem empfangenen Nachrichtensignal einen Referenztakt ableiten kann, **gekennzeichnet durch**
Mittel zum Prüfen, ob der Referenztakt während einer Ausführung des Verfahrens nach Anspruch 1 eine aufmodulierte Information enthält.

13. Netzelement nach Anspruch 12 mit einem steuerbaren Oszillator, bei dem die Mittel zum Prüfen, ob der Referenztakt eine aufmodulierte Information enthält, ein Kontrollsignal für den steuerbaren Oszillator auswerten.

14. Netzelement nach Anspruch 13 mit einer digital arbeitenden Phasenregelschleife zur Steuerung des steuerbaren Oszillators, wobei das Kontrollsignal für den steuerbaren Oszilator von einem Prozessor erzeugt wird und dieser Prozessor zusätzlich das Kontrollsignal auswertet, um eine Prüfung des Referenztaktes durchzuführen.

15. Netzelement nach Anspruch 12, bei dem die Taktableitungsschaltung folgende Baugruppen umfaßt:
- einen digital arbeitenden Phasenkomparator (DPK),
- einen digitalen Tiefpaßfilter (TP), der mit einem Ausgang des Phasenkomparators (DPK) verbunden ist,
- einen Analog/Digital-Wandler (ADW) der mit dem Ausgang des digitalen Tiefpaßfilters (TP) verbunden ist, und
- einen spannungsgesteuerten Quartzoszillator (VCXO), dessen Steuereingang mit dem Ausgang des Analog/Digital-Wandlers (ADW) verbunden ist,
und bei dem die Mittel zum Prüfen des Referenztaktes eine Prüfeinrichtung (PE) umfassen, die mit dem digitalen Phasenkomparator (DPK) verbunden ist und während der Durchführung des Verfahrens nach Anspruch 1 über diese Verbindung regelmäßig Phasenmeßwerte erhält.
